(19) Europäisches Patentamt / European Patent Office / Office européen des brevets

(11) **EP 4 380 093 B1**

(12) **EUROPEAN PATENT SPECIFICATION**

(45) Date of publication and mention
of the grant of the patent:
**22.04.2026 Bulletin 2026/17**

(21) Application number: **22853481.4**

(22) Date of filing: **04.08.2022**

(51) International Patent Classification (IPC):
**H04L 5/00** *(2006.01)* **H04W 72/04** *(2023.01)*
**H04L 1/00** *(2006.01)* **H04L 27/26** *(2006.01)*

(52) Cooperative Patent Classification (CPC):
**H04L 5/00; H04L 1/0046; H04L 1/0072;**
**H04L 5/0007; H04L 5/001; H04L 5/0053;**
**H04L 27/26;** H04L 27/26025

(86) International application number:
**PCT/KR2022/011534**

(87) International publication number:
**WO 2023/014105 (09.02.2023 Gazette 2023/06)**

(54) **METHOD AND APPARATUS FOR MONITORING CONTROL SIGNAL IN WIRELESS COMMUNICATION SYSTEM**

VERFAHREN UND VORRICHTUNG ZUR ÜBERWACHUNG EINES STEUERSIGNALS IN EINEM DRAHTLOSKOMMUNIKATIONSSYSTEM

PROCÉDÉ ET APPAREIL DE SURVEILLANCE DE SIGNAL DE COMMANDE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2021 US 202163230008 P**
**13.08.2021 KR 20210107476**
**02.12.2021 US 202163285449 P**

(43) Date of publication of application:
**05.06.2024 Bulletin 2024/23**

(73) Proprietor: **LG Electronics Inc.**
**Yeongdeungpo-gu**
**Seoul 07336 (KR)**

(72) Inventors:
• **CHOI, Seunghwan**
**Seoul 06772 (KR)**
• **YANG, Suckchel**
**Seoul 06772 (KR)**
• **KIM, Seonwook**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(56) References cited:
**KR-A- 20200 101 413**

• **NOKIA ET AL: "PDCCH monitoring enhancements", vol. RAN WG1, no. e-Meeting; 20210412 - 20210420, 6 April 2021 (2021-04-06), XP051993156, Retrieved from the Internet <URL:https://ftp.3gpp.org/tsg_ran/WG1_RL1/ TSGR1_104b-e/Docs/R1-2102559.zip R1-2102559 PDCCH monitoring enhancements.docx> [retrieved on 20210406]**
• **QUALCOMM INCORPORATED: "PDCCH monitoring enhancements", vol. RAN WG1, no. e-Meeting; 20210412 - 20210420, 7 April 2021 (2021-04-07), XP052177958, Retrieved from the Internet <URL:https://ftp.3gpp.org/tsg_ran/ WG1_RL1/TSGR1_104b-e/Docs/R1-2103158.zip R1-2103158_8.2.2_PDCCH monitoring enhancement.docx> [retrieved on 20210407]**

EP 4 380 093 B1

- **VIVO: "Discussions on PDCCH monitoring enhancements for NR from 52.6- 71GHz", vol. RAN WG1, no. e-Meeting; 20210412 - 20210420, 6 April 2021 (2021-04-06), XP051993119, Retrieved from the Internet <URL:https://ftp.3gpp.org/ tsg_ran/WG1_RL1/TSGR1_104b-e/Docs/ R1-2102515.zip R1-2102515 Discussions on PDCCH monitoring enhancements for NR from 52.6GHz to 71GHz.docx> [retrieved on 20210406]**
- **QUALCOMM INCORPORATED: "PDCCH monitoring enhancements", vol. RAN WG1, no. e-Meeting; 20211011 - 20211019, 2 October 2021 (2021-10-02), XP052059109, Retrieved from the Internet <URL:https://ftp.3gpp.org/tsg_ran/ WG1_RL1/TSGR1_106b-e/Docs/R1-2110173.zip R1-2110173_8.2.2_PDCCH monitoring enhancement.docx> [retrieved on 20211002]**
- **OH, HYUN-JOO: "Generation of cognitive disorder dog model using transgenic somatic cell nuclear transfer", FINAL REPORT, SEOUL NATIONAL UNIVERSITY, KOREA, 1 January 2019 (2019-01-01), Korea, pages 1 - 34, XP009543159**
- **PANASONIC: "PDCCH monitoring enhancement for NR from 52.6GHz to 71GHz", 3GPP DRAFT; R1-2102809, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210412 - 20210420, 6 April 2021 (2021-04-06), Mobile Competence Centre ; 650, route des Lucioles ; F-06921 Sophia-Antipolis Cedex ; France , XP051993210**
- **HUAWEI, HISILICON: "Enhancement on PDCCH monitoring", 3GPP DRAFT; R1-2102328, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20210412 - 20210420, 7 April 2021 (2021-04-07), Mobile Competence Centre ; 650, route des Lucioles ; F-06921 Sophia-Antipolis Cedex ; France, XP052177048**
- **VIVO: "Discussions on PDCCH monitoring enhancements for NR from 52.6- 71GHz", 3GPP DRAFT; R1-2102515, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210412 - 20210420, 6 April 2021 (2021-04-06), Mobile Competence Centre ; 650, route des Lucioles ; F-06921 Sophia-Antipolis Cedex ; France , XP051993119**

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

QUALCOMM INCORPORATED: "PDCCH monitoring enhancements",3GPP DRAFT; R1-2110173, discusses multi-slot PDCCH monitoring capability and dynamic switching of PDCCH monitoring behaviors.

### DISCLOSURE

### TECHNICAL PROBLEM

The object of the present disclosure is to provide a method and apparatus for monitoring a control signal efficiently in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for monitoring a signal in a wireless communication system.

In another aspect of the present disclosure, there is provided a storage medium for monitoring the signal method.

### ADVANTAGEOUS EFFECTS

According to one embodiment of the present disclosure, when the control signals are monitored by the UE, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 shows an example in which a physical channel is mapped in a slot.
FIGS. 4 to 6 are diagrams illustrating methods for transmitting and receiving a signal according to the embodiments of the present disclosure.
FIGS. 7 to 10 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

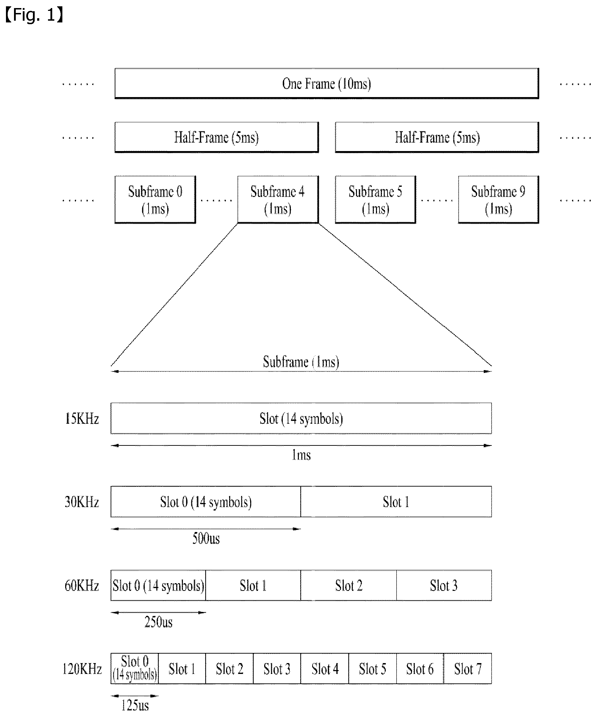

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | *160* | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15 *2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

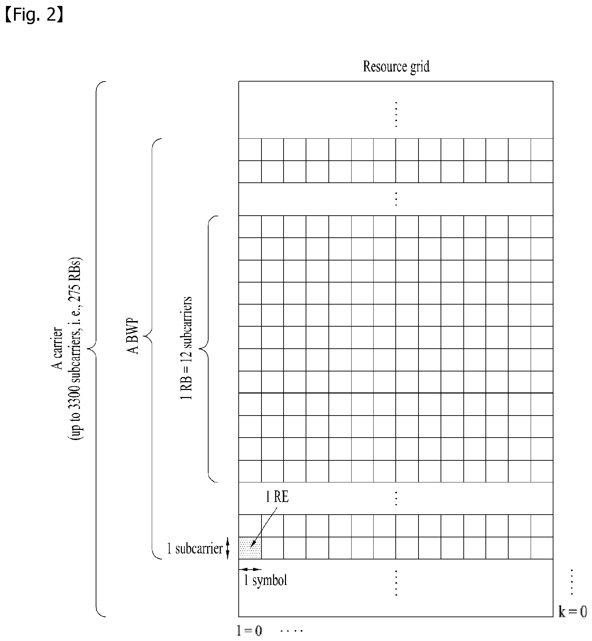

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interfaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

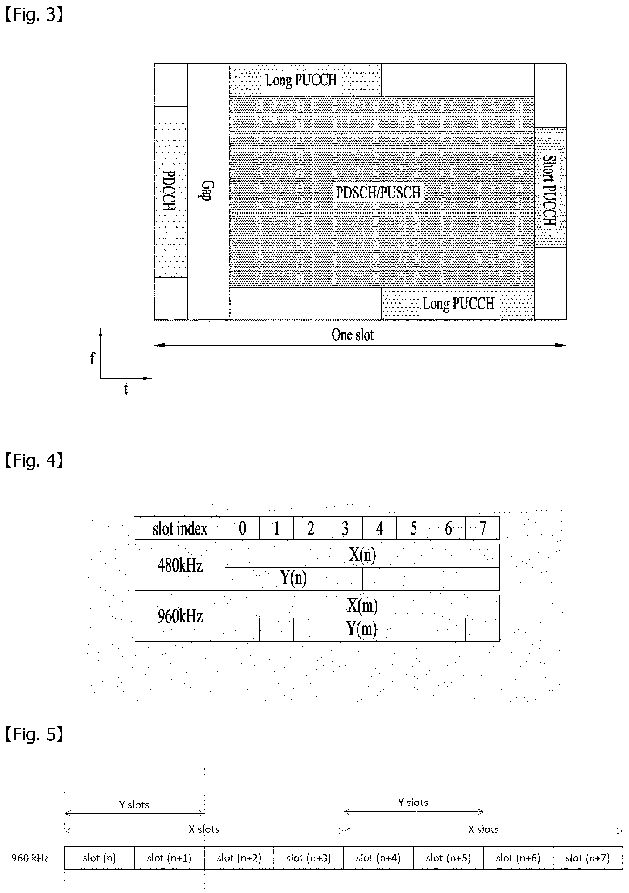

FIG. 3 shows an example in which a physical channel is mapped in a slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emution in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.

- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

## 1. Control channel monitoring in high frequency band

The above description may be applied in combination with the methods proposed in the present disclosure to be described later, or may be supplemented to clarify the technical characteristics of the methods proposed in the present disclosure.

In addition, the methods to be described later may be equally applied to the above-described NR system (licensed band) or shared spectrum, and may be modified or replaced to fit the terms, expressions, structures, and the like defined in each system to implement the technical idea proposed in the present specification in the corresponding system.

In a NR system, multiple numerologies (or subcarrier spacing (SCS)) are supported to support a variety of 5G services. For example, a wide area in typical cellular bands is supported for an SCS of 15 kHz, a dense-urban area, a lower latency, and a wider carrier bandwidth are supported for an SCS of 30 kHz/60 kHz, and a larger bandwidth than 24.25 GHz is supported for an SCS of 60 kHz or more. An NR frequency band up to Release 16 may be defined as two types of frequency ranges (FR1 and FR2) and may be configured as shown in Table 3. In addition, discussions are going on to support future NR systems in a frequency band defined in FR1/FR2 or higher (e.g., 52.6 GHz to 71 GHz).

A higher frequency band than FR1 and FR2 bands (e.g., 52.6 GHz to 114.25 GHz band, particularly 52.6 GHz to 71 GHz) may be referred to as FR2-2. Waveforms, SCS, CP length, timing, etc. defined for FR1 and FR2 in the existing NR system may not be applied to FR2-2.

SCS of 120 kHz, 480 kHz, and 960 kHz may be used for an operation of the NR in an FR2-2 band. In the case of SCS of 480 kHz and 960 kHz, the length of an OFDM symbol may be shorter than that of 120 kHz. For example, an OFDM symbol of 480 kHz is 1/4 the length of an OFDM symbol of 120 kHz, and an OFDM symbol of 960 kHz is 1/8 times of the length of an OFDM symbol of 120 kHz. For a short-length slot to which 480 kHz and 960 kHz are applied, when a PDCCH monitoring operation is performed in all slots, the UE may have a burden such as power consumption. Therefore, when SCS of 480 kHz and/or 960 kHz is configured, multi-slot PDCCH monitoring may be introduced.

Multi-slot PDCCH monitoring refers to an operation of performing PDCCH monitoring by determining blind decoding (BD)/control channel element (CCE) limits based on a plurality of consecutive slots and/or on a basis of a plurality of consecutive slots. In the conventional NR rel-15, BD/CCE limits may be determined in units of one slot, and in NR rel-16, BD/CCE limits may be determined in units of spans confined within one slot. The span may mean a PDCCH monitoring unit including consecutive symbols.

A slot group consists of a specific number of multiple consecutive slots (which may be expressed as X). BD/CCE limits may be defined in units of another specific number of multiple consecutive slots (or symbols) within one slot group (which may be expressed as Y). For example, for 480 kHz, a slot group may be determined to be four consecutive slots, and the BD/CCE limits for PDCCH monitoring may be defined for two consecutive slots within the slot group. Therefore, X = 4 and Y = 2, where Y is the slot unit. As another example, for 960 kHz, a slot group is determined to be 8 consecutive slots, and the BD/CCE limits for PDCCH monitoring may be defined for four consecutive slots within the slot group. Therefore, X = 8 and Y = 4, where Y is the slot unit. The two examples mentioned above are one of the proposed methods under discussion in 3GPP RAN1 WG, which may have the advantage of aligning the slot group for 480 kHz and/or 960 kHz with the slot length for an SCS of 120 kHz. Additionally, the number Y of slots or symbols may be modified through higher layer signaling such as RRC or through UE capability signaling, and the location of Y within X may be adjusted in a similar way.

When the UE supports carrier aggregation, the UE may report the number of DL cells capable of performing BD/CCE to the network (e.g., gNB) using pdcch-BlindDetectionCA, etc., as shown in Table 7 below (see Section 10 of 3GPP 38.214) (in the specifications, the number of DL cells is defined as $N_{\text{cells}}^{cap}$ and hereinafter, the number of DL cells is represented as N_cap). In addition, the UE may be configured with the number of DL serving cells from the network (in the specifications, the number of DL serving cells is defined as $N_{\text{cells}}^{\text{DL}}$, $N_{\text{cells},0}^{\text{DL}}$, or $N_{\text{cells},1}^{\text{DL}}$, and hereinafter, the number of DL serving cells is represented as N_dl). Herein, the term "specifications" refer to the technical content described in 3GPP documents.

[Table 7]

| |
|---|
| If a UE indicates in UE-NR-Capability a carrier aggregation capability larger than 4 serving cells and the UE is not provided monitoringCapabilityConfig for any downlink cell or if the UE is provided monitoringCapabilityConfig = r15monitoringcapability for all downlink cells where the UE monitors PDCCH, the UE includes in UE-NR-Capability an indication for a maximum number of PDCCH candidates and for a maximum number of non-overlapped CCEs the UE can monitor per slot when the UE is configured for carrier aggregation operation over more than 4 cells. When a UE is not configured for NR-DC operation, the UE determines a capability to monitor a maximum number of PDCCH candidates and a maximum number of non-overlapped CCEs per slot that corresponds to $N_{cells}^{cap}$ downlink cells, where |

(continued)

- $N_{cells}^{cap}$ is $N_{cells,0}^{DL}$ +R· $N_{cells,1}^{DL}$ if the UE does not provide pdcch-BlindDetectionCA where

$N_{cells,0}^{DL}$ + $N_{cells,1}^{DL}$ is the number of configured downlink serving cells

- otherwise, $N_{cells}^{cap}$ is the value of pdcch-BlindDetectionCA

When N_dl <= N_cap, the UE may perform PDCCH monitoring for each cell up to the BD/CCE limits configured for each serving cell. However, when N_dl > N_cap, if the UE performs PDCCH monitoring for each cell up to the BD/CCE limits configured for each serving cell, it may exceed the PDCCH monitoring capability (i.e. N_cap) reported by the UE. Therefore, the UE may change the BD/CCE limits for each cell according to predetermined rules. The modification of the BD/CCE limits for each cell by the UE according to the predetermined rules may be expressed as BD/CCE reconfiguration. Table 8 is an excerpt from Section 10.1 of 3GPP 38.214, which shows an example of the BD/CCE reconfiguration. Table 8 is related to slot-based (per-slot) PDCCH monitoring, and BD and CCE limits ( $M_{PDCCH}^{total,slot,\mu}$ and $C_{PDCCH}^{total,slot,\mu}$ ) are reconfigured on a per slot basis using N_cap and N_dl. Details of span-based (per-span) PDCCH monitoring may also be found in Section 10.1 of 3GPP 38.214.

[Table 8]

If a UE

- is configured with $N_{cells,0}^{DL}$ + $N_{cells,1}^{DL}$ downlink cells for which the UE is not provided monitoringCapability-Config, or is provided monitoringCapabilityConfig-r16 = r15monitoringcapability but not provided coresetPoolIndex,
- with associated PDCCH candidates monitored in the active DL BWPs of the scheduling cell(s) using SCS config-

uration μ, where $\sum_{\mu=0}^{3} (N_{cells,0}^{DL,\mu}+\gamma \cdot N_{cells,1}^{DL,\mu})>N_{cells}^{cap}$ ,

and

- a DL BWP of an activated cell is the active DL BWP of the activated cell, and a DL BWP of a deactivated cell is the DL BWP with index provided by firstActiveDownlinkBWP-Id for the deactivated cell, the UE is not required to monitor more than

$M_{PDCCH}^{total,slot,\mu} = \lfloor N_{cells}^{cap} \cdot M_{PDCCH}^{max,slot,\mu} \cdot (N_{cells,0}^{DL,\mu}+\gamma \cdot N_{cells,1}^{DL,\mu})/\sum_{\mu=0}^{3}(N_{cells,0}^{DL,\mu}+\gamma \cdot N_{cells,1}^{DL,\mu}) \rfloor$ PDCCH candidates or more than

$$C_{PDCCH}^{total,slot,\mu} = \lfloor N_{cells}^{cap} \cdot C_{PDCCH}^{max,slot,\mu} \cdot (N_{cells,0}^{DL,\mu}+\gamma \cdot N_{cells,1}^{DL,\mu})/\sum_{\mu=0}^{3}(N_{cells,0}^{DL,\mu}+\gamma \cdot N_{cells,1}^{DL,\mu}) \rfloor$$

non-overlapped CCEs per slot on the active DL BWP(s) of scheduling cell(s) from the $N_{cells,0}^{DL,\mu}+N_{cells,1}^{DL,\mu}$

downlink cells. $N_{cells}^{cap}$ is replaced by $N_{cells,r15}^{cap-r16}$ if a UE is configured with downlink cells for which the UE is provided both
monitoringCapabilityConfig-r16 = r15monitoringcapability and
monitoringCapabilityConfig-r16 = rl6monitoringcapability.

When carrier aggregation (CA) is applied to multiple cells where multi-slot monitoring is configured, if the values of X and/or Y are different for each cell, there may be ambiguity in reconfiguring the BD/CCE limits. For example, assuming that for a cell with an SCS of 480 kHz, X = 4 and Y = 2, where Y slots are set to the first two slots in X, and for a cell with an SCS of 960 kHz, X = 8 and Y = 4, where Y slots are set to third to sixth slots in X as shown in FIG. 4, if the BD/CCE limits are configured in a situation where N_cap < N_dl, it may be ambiguous to determine which slot duration needs to serve as the reference.
Additionally, in CA scenarios where 120 kHz and 480 kHz (or 960 kHz) are configured together, if slot-based (single-slot) PDCCH monitoring and multi-slot PDCCH monitoring are used together, similar ambiguity may occur. In the present disclosure, provided is a method for reconfiguring BD/CCE limits for various CA situations where single-slot PDCCH monitoring and multi-slot PDCCH monitoring are used together.

## 1.1. Method of reconfiguring BD/CCE limits for multi-slot PDCCH monitoring in CA scenarios

In Rel-15/16 NR, the following equations are used to reconfigure BD/CCE limits for CA consisting of single-slot PDCCH monitoring cells. The reconfiguration is performed when $\sum_{\mu=0}^{3}\left(N_{cells,0}^{DL,\mu} + \gamma \cdot N_{cells,1}^{DL,\mu}\right) > N_{cells}^{cap}$.

$$[\text{Equation 1}]$$

$$M_{PDCCH}^{total,slot,\mu} = \left\lfloor N_{cells}^{cap} \cdot M_{PDCCH}^{max,slot,\mu} \cdot \left(N_{cells,0}^{DL,\mu} + \gamma \cdot N_{cells,1}^{DL,\mu}\right) \middle/ \sum_{j=0}^{3}\left(N_{cells,0}^{DL,j} + \gamma \cdot N_{cells,1}^{DL,j}\right) \right\rfloor$$

$$[\text{Equation 2}]$$

$$C_{PDCCH}^{total,slot,\mu} = \left\lfloor N_{cells}^{cap} \cdot C_{PDCCH}^{max,slot,\mu} \cdot \left(N_{cells,0}^{DL,\mu} + \gamma \cdot N_{cells,1}^{DL,\mu}\right) \middle/ \sum_{j=0}^{3}\left(N_{cells,0}^{DL,j} + \gamma \cdot N_{cells,1}^{DL,j}\right) \right\rfloor$$

For CA consisting of multi-slot PDCCH monitoring cells, it is necessary to reconfigure the BD/CCE limits when the number of DL cells configured to the UE is greater than N_cap ( $\sum_{\mu}\left(N_{cells,0}^{DL,\mu} + \gamma \cdot N_{cells,1}^{DL,\mu}\right) > N_{cells}^{cap}$ ). To this end, modified equations such as Equations 3 and 4 may be used.

$$[\text{Equation 3}]$$

$$M_{PDCCH}^{total,Mslot,\mu} = \left\lfloor N_{cells}^{cap} \cdot M_{PDCCH}^{max,Mslot,\mu} \cdot \left(N_{cells,0}^{DL,Mslot\ \mu} + \gamma \cdot N_{cells,1}^{DL,Mslot,\mu}\right) \middle/ \sum_{j\in I}\left(N_{cells,0}^{DL,j} + \gamma \cdot N_{cells,1}^{DL,j}\right) \right\rfloor$$

$$[\text{Equation 4}]$$

$$C_{PDCCH}^{total,Mslot,\mu} = \left\lfloor N_{cells}^{cap} \cdot C_{PDCCH}^{max,Mslot,\mu} \cdot \left(N_{cells,0}^{DL,Mslot,\mu} + \gamma \cdot N_{cells,1}^{DL,Mslot,\mu}\right) \middle/ \sum_{j\in I}\left(N_{cells,0}^{DL,j} + \gamma \cdot N_{cells,1}^{DL,j}\right) \right\rfloor$$

In the above equations, the variable Mslot may be understood as modifying a variable for single-slot PDCCH monitoring to be suitable for multi-slot PDCCH monitoring. For example, $M_{PDCCH}^{total,Mslot,\mu}$ refers to BD limits on multiple consecutive slots (i.e., maximum number of monitored PDCCH candidates per multi-slot for a DL BWP with SCS configuration $\mu$ for a serving cell). In addition, $N_{cells,0}^{DL,Mslot,\mu}$ and $N_{cells,1}^{DL,Mslot,\mu}$ refer to the numbers of DL cells with SCS configuration $\mu$ configured for multi-slot PDCCH monitoring of the UE. Further, $N_{cells,0}^{DL,\mu}$ and $N_{cells,1}^{DL,\mu}$ refers to the total numbers of DL cells with the SCS configuration $\mu$ configured to the UE. The entire cells may include both single-slot PDCCH monitoring cells and multi-slot PDCCH monitoring cells. J refers to a set of SCS configurations $\mu$ for all cells included in CA.

## 1.2. Method of reconfiguring BD/CCE limits in CA scenarios including multi-slot PDCCH monitoring cells

In CA scenarios including multiple cells configured for multi-slot PDCCH monitoring (e.g., cells configured with an SCS of 480 kHz and/or 960 kHz), if N_cap < N_dl, BD/CCE reconfiguration may be required. In this case, the reference duration for BD/CCE reconfiguration may vary depending on the locations and sizes of X and/or Y, which configure multi-slot PDCCH monitoring. In the proposed methods described later, the slot group of a cell where single-slot monitoring is configured may be interpreted as one slot (i.e., X = 1) for the SCS of the corresponding cell. In addition, Y of a cell where single-slot monitoring is configured may also be interpreted as one slot.

1.2-1) When the locations and sizes of X of all cells included in CA are the same, i.e., when the boundaries between slot groups are aligned,

- When all cells (or component carriers) have the same slot group (X slots), the BD/CCE reconfiguration may be performed based on Equations 3 and 4. In this case, cells may have different numerologies or SCSs. In addition, the reference duration for reconfiguration may be the slot group. The UE may compare $N\_cap$ and $N\_dl$ on a per X-slot basis, that is, for each slot group and then perform the BD/CCE reconfiguration if $N\_cap < N\_dl$.

Specifically, if the slot groups of all cells are temporally aligned and all cells have the same value of Y, the UE may perform the BD/CCE reconfiguration based on Equations 3 and 4. In this case, the reference duration for reconfiguration may be Y slots or symbols.

- When all cells have the same slot group (X slots) but Y is not temporally aligned, the reference duration for BD/CCE reconfiguration need to be modified based on Equations 3 and 4. In this case, cells may have different numerologies. Alternatively, multiple cells may have the same numerology. In this case, there are three ways to configure the reference duration for BD/CCE reconfiguration.

   1.2-1-(1) Among the values of Y configured for all cells included in CA, the reference duration for reconfiguration may be configured based on the largest value of Y. In other words, if the "union of PDCCH monitoring occasion on all serving cells" is included within the largest Y value, the BD/CCE reconfiguration may be performed by setting the largest Y value as the reference duration for reconfiguration.
   1.2-1-(2) If the "union of PDCCH monitoring occasion on all serving cells" is included within the upper bound of Y, the upper bound of Y (Y_upper) may be set as the reference duration for reconfiguration. The size of Y_upper may be set to a value less than or equal to X. For example, Y_upper = 4 may be configured for the 480 kHz and 960 kHz SCSs, or Y_upper = X/2 may be configured. Y_upper may be predefined based on the SCS or configured through RRC signaling. For example, Y_upper = X/2 may be predefined by default. In this case, the starting point of Y_upper may be determined as a symbol containing the first PDCCH monitoring occasion (MO) for all cells. A specific number (e.g., X/2) of consecutive symbols from the determined starting symbol may be set as the reference duration for BD/CCE reconfiguration.
   1.2-1-(3) In all cases except for 1.2-1-(1) or 1.2-1-(2), the slot group, i.e., X slots, may be set as the reference duration for BD/CCE reconfiguration.
   1.2-2) When the boundaries of slot groups are not aligned,

The misalignment between the slot group boundaries refers to all cases where slot groups within cells included in CA are not temporally aligned or slot groups have different sizes even if the starting slot and symbol of the slot groups are the same. In such cases, the UE may establish a reference SCS and use a slot related to the reference SCS as the reference duration for BD/CCE reconfiguration. The reference SCS may be one of the SCSs configured for the cells included in CA. For example, the reference SCS may be the smallest SCS among the configured SCSs, or the reference SCS could be an SCS not configured for the cells of the UE.

For example, in the FR2-2 band, 120 kHz is a mandatory SCS, and 480 kHz and 960 kHz are optional SCSs. In this specification, 'mandatory a' means that the UE should support a, while 'optional a' means that the UE may or may not support a. In this case, even if a cell configured with 480 kHz or 960 kHz is not aggregated with a cell configured with the 120 kHz SCS, the 120 kHz SCS may still be determined as the reference SCS. Information on the reference SCS may be provided to the UE through signaling such as RRC. Alternatively, the reference SCS may be predefined or determined based on combinations of SCSs in cells included in CA. For example, in the FR2-2 band, 120 kHz may be used as the reference SCS. Alternatively, 120 kHz may be determined as the reference SCS only when the 120 kHz SCS is present among the SCSs of cells included in CA.

As another method for cases where the boundaries of slot groups are not aligned, a set of consecutive X slots for a specific cell included in CA may be determined as the reference duration for BD/CCE reconfiguration. In this case, the specific cell may be determined as a cell with the lowest or highest cell index among cells with the same numerology. Alternatively, the specific cell may be configured/instructed by the BS through parameters such as RRC. More specifically, among cells with the same numerology and/or the same value of X and/or Y, a cell with the lowest or highest cell index may be determined as the specific cell.

In this case, cells may have different numerologies. Alternatively, multiple cells may have the same numerology. The UE may use Equations 3 and 4 in the configured reference duration to perform the BD/CCE reconfiguration. Alternatively, even when slot groups are not aligned, if the "union of PDCCH MOs on all serving cells" of all cells included in CA is included in the largest Y or Y_upper (as described in Method 1.2-1-(1) or 1.2-2-(2)), the UE may configure the largest Y or Y_upper as the reference duration for BD/CCE reconfiguration.

1.2-3) In CA scenarios including cells where multi-slot PDCCH monitoring is performed based on a span of (X, Y)

For multi-slot PDCCH monitoring where the BD/CCE limits are determined based on the (X, Y) span, Equations 3 and 4 may be applied to a span composed of multiple slots or symbols. In this case, X in (X, Y) represents the minimum interval between spans, and Y represents the maximum span size. In addition, the processes of comparing N_cap and N_dl based on X slots and determining the necessity of the BD/CCE reconfiguration and the methods of configuring the reference duration for reconfiguration may be applied with reference to the span consisting of multiple slots or symbols.

For example, when the union of the PDCCH MOs described above is included in the largest Y or Y_upper, the process of performing the BD/CCE reconfiguration by regarding the largest Y or Y_upper as a specific time duration may also be applied to multi-slot PDCCH monitoring based on the (X, Y) span, where Y may refer to multiple consecutive slots or multiple consecutive symbols.

In another example, when there is no specific time duration aligned between cells included in CA, the UE may perform the BD/CCE reconfiguration or calculate the BD/CCE limits by determining the slot length of the reference SCS as the specific time duration. As a more specific example, one slot for 120 kHz may be set as the reference duration (specific time duration) for BD/CCE reconfiguration for 480 or 960 kHz.

Additionally, when applying Methods 1.2-1 and 1.2-2, a method for checking BD/CCE limits is proposed. If the slot groups of all cells included in CA are aligned (or if the slot groups are aligned with other time references such as the largest Y or Y_upper), the UE may determine and check the BD/CCE limits within aligned specific time durations. However, if all cells do not include the aligned specific time durations, the BD/CCE limits may be determined or checked only for some cells that include the aligned specific time durations.

For example, when four cells with an SCS of 480 kHz are carrier-aggregated, the slot groups of cell #1 and cell #2 may be aligned, and the slot groups of cell #3 and cell #4 may also be aligned. The slot length of the slot groups of cell #1 and cell #2 is referred to as slot group 1, and the slot length of the slot groups of cell #3 and cell #4 is referred to as slot group 2. If slot group 1 and slot group 2 are not aligned, the cells corresponding to slot group 1 and the cells corresponding to slot group 2 are considered to have different numerologies, and the BD/CCE limits may be determined or checked independently. As another example, it is assumed that when four cells with an SCS of 960 kHz are carrier-aggregated, three cells have X = 4, and the remaining cell has X = 2. Since the three cells with X = 4 include an aligned specific time duration, the BD/CCE limits may be calculated collectively for the three cells. For the remaining cell with X = 2, the BD/CCE limits may be calculated independently from the three cells.

When applying Methods 1.2-1, 1.2-2, and 1.2-3, if cells have different numerologies, the BD/CCE reconfiguration and/or BD/CCE limit calculation may be performed separately. In addition, when applying Methods 1.2-1, 1.2-2, and 1.2-3, if X and/or Y for configuring multi-slot PDCCH monitoring have different values although cells have the same numerology, the BD/CCE reconfiguration and/or BD/CCE limit calculation may be performed separately based on configured (or reported) combinations of X and/or Y.

After the BD/CCE limits are determined according to the above-described methods, the network and/or BS may determine PDCCH-related configurations by configuring search spaces such that the UE does not exceed the BD/CCE limits. Overbooking is allowed for an USS allocated to a primary cell or primary secondary cell. The UE performs dropping to avoid exceeding the BD/CCE limits. In this case, USS dropping should be performed on a cell for multi-slot PDCCH monitoring. When the cell for multi-slot PDCCH monitoring is not temporally aligned with a cell for single-slot PDCCH monitoring, which are carrier-aggregated together with the cell for multi-slot PDCCH monitoring, the USS dropping may be performed based on a new slot group aligned to the slots of the cell for single-slot PDCCH monitoring. The USS dropping may also be performed based on the initially configured slot group that is not aligned. In addition, a portion of the newly configured slot group (X slots) not aligned with the existing slot groups may be dropped as the highest priority.

## 1.3. Method of configuring default value of X and default value of Y

X slots and Y slots (or symbols) for configuring multi-slot PDCCH monitoring may be determined by the network or the configuration and/or report of the UE. Specifically, the UE may receive the values of X and/or Y through signaling such as RRC. Before receiving the signaling such as RRC, the UE may inform the network of the preferred (operable) X and Y values of the UE through capability reporting. In this case, the UE may receive or report the locations and sizes of X and/or Y.

Before RRC connection establishment (or UE capability reporting), the UE may assume the default values of X and/or Y, which are preconfigured, and perform multi-slot PDCCH monitoring. The corresponding default values of X and Y may be determined in units of slots.

(1) In general, X and Y may have multiple different values. The default X and Y values used by the UE (before the RRC connection establishment/UE capability reporting) may be defined as follows. The default value of X may be defined as the maximum value among multiple X values, and the default value of Y may be defined as the minimum value among multiple Y values. Alternatively, the default values of X and Y may be defined as the combination of the maximum X value and the minimum Y value (which may be paired with the corresponding X value based on the UE capability). Alternatively, the default values X and Y may be defined as the combination of the minimum Y value and the maximum X value (which may be paired with the corresponding Y value based on the UE capability). Alternatively, the default value of X may be defined as the minimum value among multiple X values, and the default value Y may be defined as the minimum value among multiple Y values. Alternatively, the default values X and Y may be defined as the combination of the minimum X value and the minimum Y value (which may be paired with the corresponding X value based on the UE capability). Alternatively, the default values X and Y may be defined as the combination of the minimum Y value and the minimum X value (which may be paired with the corresponding Y value based on the UE capability).

(2) Specifically, the UE may configure the default value of X for the 480 kHz SCS to X = 4. The UE may configure X to align with the slot boundaries for the 120 kHz SCS (or the reference SCS). The UE may determine the default value of Y for the 480 kHz SCS as Y = 1 (first slot within X), Y = 2 (first and second slots within X), or Y = X/2.

(3) Specifically, the UE may configure the default value of X for the 960 kHz SCS to X = 8. The UE may configure X to align with the slot boundaries for the 120 kHz SCS (or the reference SCS). The UE may determine the default value Y for the 480 kHz SCS as Y = 1 (first slot within X), Y = 2 (first and second slots within X), Y = 4 (first to fourth slots within X), or Y = X/2.

(4) If Y is capable of being configured in terms of slots and symbols, the default value of Y may be configured in units of slots.

Additionally, the UE may determine the location of X within a frame or half-frame differently depending on the index of an SSB that the UE successfully receives. For example, the default value of X needs to be aligned with the slot boundaries for the 120 kHz SCS. In this case, the slot indices for the 120 kHz SCS aligned within a single frame may vary depending on the index of the successfully received SSB.

Specifically, depending on each SSB index, the location of CORESET#0 linked to the corresponding SSB may vary (within the frame). Thus, a slot including CORESET#0 may be determined as the starting point of X and or Y. Alternatively, even if the location of X remains the same, the location of Y within X slots may vary depending on the SSB index.

Specifically, the index of a slot including the Type0-PDCCH CSS set to be monitored may be determined based on (i) the multiplexing pattern between SSBs and CORESETs and (ii) the SSB index (the index is $n_0$ if the multiplexing pattern 1 or $n_c$ if the multiplexing pattern is 2/3). Table 9 is extracted from Section 13 3GPP TS 38.213 and shows an example of determining the index of a slot including the Type0-PDCCH CSS set to be monitored based on (i) the multiplexing pattern between SSBs and CORESETs and (ii) the SSB index

When the multiplexing pattern between SSBs and CORESETs is pattern 1, the index of a slot $n_0$ for monitoring the Type0-PDCCH CSS set may be determined based on an SSB index i as follows: $n_0 = \left( O \cdot 2^\mu + \lfloor i \cdot M \rfloor \right) \bmod N_{\text{slot}}^{\text{frame},\mu}$.

Therefore, the slot $n_0$ defined for each SSB index i may be determined as the starting point for X for each SSB index i. Alternatively, X may be aligned with the slot boundaries for a specific reference SCS (e.g., 120 kHz), and the slot $n_0$ defined for each SSB index i may be determined as the starting point for Y.

[Table 9]

| 13 UE procedure for monitoring Type0-PDCCH CSS sets |
| --- |
| ... <br> For operation without shared spectrum channel access and for the SS/PBCH block and CORESET multiplexing pattern 1, a UE monitors PDCCH in the Type0-PDCCH CSS set over two consecutive slots starting from slot $n_0$. <br> For SS/PBCH block with index *i*, the UE determines an index of slot $n_0$ as $n_0 = \left( O \cdot 2^\mu + \lfloor i \cdot M \rfloor \right) \bmod N_{\text{slot}}^{\text{frame},\mu}$ that is in a frame with system frame number (SFN) $SFN_c$ satisfying $SFN_c \bmod 2 = 0$ if $\left\lfloor \left( O \cdot 2^\mu + \lfloor i \cdot M \rfloor \right) / N_{\text{slot}}^{\text{frame},\mu} \right\rfloor \bmod 2 = 0$, or in a frame with SFN satisfying $SF_C \bmod 2 = 1$ if $\left\lfloor \left( O \cdot 2^\mu + \lfloor i \cdot M \rfloor \right) / N_{\text{slot}}^{\text{frame},\mu} \right\rfloor \bmod 2 = 1$. *M* and *O* are provided by Tables 13-11 and 13-12, and $\mu \in \{0,1,2,3\}$ based on the SCS for PDCCH receptions in the CORESET [4, TS 38.211]. The index for the first symbol of the CORESET in slots $n_0$ and $n_0 + 1$ is the first symbol index provided by Tables 13-11 and 13-12. |

13 UE procedure for monitoring Type0-PDCCH CSS sets

For operation with shared spectrum channel access and for the SS/PBCH block and CORESET multiplexing pattern 1, a UE monitors PDCCH in the Type0-PDCCH CSS set over slots that include Type0-PDCCH monitoring occasions associated with SS/PBCH blocks that are quasi co-located with the SS/PBCH block that provides a CORESET for Type0-PDCCH CSS set with respect to averager gain, quasi co-location 'typeA' and 'typeD' properties, when applicable [6, TS 38.214]. For a candidate SS/PBCH block index $i$, where $0 \le \bar{i} \le \bar{L}_{max}$ - 1, two consecutive slots starting from slot $n_0$ include the associated Type0-PDCCH monitoring occasions. The UE determines an index of slot $n_0$ as $n_0 = (O \cdot 2^\mu + \lfloor \bar{i} \cdot M \rfloor) \bmod N_{slot}^{frame,\mu}$ that is in a frame with system frame number (SFN) SFN$_c$ satisfying SFN$_c$ $mod$ 2 = 0 if $\lfloor (O \cdot 2^\mu + \lfloor \bar{i} \cdot M \rfloor)/N_{slot}^{frame,\mu} \rfloor \bmod 2 = 0$, or in a frame with SFN satisfying SFN$_c$ mod 2 = 1 if $\lfloor (O \cdot 2^\mu + \lfloor \bar{i} \cdot M \rfloor)/N_{slot}^{frame,\mu} \rfloor \bmod 2 = 1$. $M$ and $O$ are provided by Table 13-11, and $\mu \in \{0,1\}$ based on the SCS for PDCCH receptions in the CORESET [4, TS 38.211]. The index for the first symbol of the CORESET in slots $n_0$ and $n_0$ + 1 is the first symbol index provided by Table 13-11. The UE does not expect to be configured with $M$ = 1/2, or with $M$ = 2, when $N_{SSB}^{QCL} = 1$.

For the SS/PBCH block and CORESET multiplexing patterns 2 and 3, a UE monitors PDCCH in the Type0-PDCCH CSS set over one slot with Type0-PDCCH CSS set periodicity equal to the periodicity of SS/PBCH block. For the SS/PBCH block and CORESET multiplexing patterns 2 and 3, if the active DL BWP is the initial DL BWP, the UE is expected to be able to perform radio link monitoring, as described in clause 5, and measurements for radio resource management [10, TS 38.133] using a SS/PBCH block that provides a CORESET for Type0-PDCCH CSS set. For a SS/PBCH block with index $i$, the UE determines the slot index $n_C$ and SFN based on parameters provided by Tables 13-13 through 13-15.

## 1.4. Modification of hashing function for multi-slot PDCCH monitoring

In the conventional NR system, CCE indices related to per-slot PDCCH monitoring may be determined as shown in Table 10. Table 10 is a part of 3GPP TS 38.213.

[Table 10]

For a search space set $s$ associated with CORESET $p$, the CCE indexes for aggregation level $L$ corresponding to PDCCH candidate $m_{s,n_{CI}}$ of the search space set in slot $n_{s,f}^\mu$ for an active DL BWP of a serving cell corresponding to carrier indicator field value $n_{CI}$ are given by

$$L \cdot \left\{ \left( Y_{p,n_{s,f}^\mu} + \left\lfloor \frac{m_{s,n_{CI}} \cdot N_{CCE,p}}{L \cdot M_{s,max}^{(L)}} \right\rfloor + n_{CI} \right) \bmod \lfloor N_{CCE,p}/L \rfloor \right\} + i$$

where

for any CSS, $Y_{p,n_{s,f}^\mu} = 0$ ;

for a USS, $Y_{p,n_{s,f}^\mu} = \left( A_p \cdot Y_{p,n_{s,f}^\mu - 1} \right) \bmod D$ , $Y_{p,-1} = n_{RNTI} \ne 0$, $A_p$ = 39827 for $p\bmod 3$ = 0, $A_p$ = 39829 for $p\bmod 3$ = 1, $A_p$ = 39839 for $p\bmod 3$ = 2, and D = 65537;

$i = 0,\cdots,L$ - 1;

$N_{CCE,p}$ is the number of CCEs, numbered from 0 to $N_{CCE,p}$ - 1, in CORESET $p$ and, if any, per RB set;

$n_{CI}$ is the carrier indicator field value if the UE is configured with a carrier indicator field by *CrossCarrierScheduling-Config* for the serving cell on which PDCCH is monitored; otherwise, including for any CSS, $n_{CI}$ = 0;

$m_{s,n_{CI}} = 0,\cdots,M_{s,n_{CI}}^{(L)} - 1$ , where $M_{s,n_{CI}}^{(L)}$ is the number of PDCCH candidates the UE is configured to monitor for aggregation level $L$ of a search space set s for a serving cell corresponding to $n_{CI}$;

for any CSS, $M_{s,max}^{(L)} = M_{s,0}^{(L)}$ ;

for a USS, $M_{s,max}^{(L)}$ is the maximum of $M_{s,n_{CI}}^{(L)}$ over all configured $n_{CI}$ values for a CCE aggregation level L of search space set s ;

the RNTI value used for $n_{RNTI}$ is the C-RNTI.

**EP 4 380 093 B1**

In Table 10, $Y_{p,n_{s,f}^{\mu}}$ is calculated for each slot, i.e., $n_{s,f}^{\mu}$. In multi-slot PDCCH monitoring, the value of $Y_{p,n_{s,f}^{\mu}}$ may be calculated on a per slot group basis. For example, by changing the slot indices in Table 10 to slot group indices, CCE indices may be calculated on a per slot group basis. Specifically, $Y_{p,n_{s,f}^{\mu}}$ may be changed to $Y_{p,G_{s,f}^{\mu}}$, and $G_{s,f}^{\mu}$ may be defined as $\mathrm{floor}(n_{s,f}^{\mu}/X)$.

When X is set to X = 4 for the 480 kHz SCS, the hashing operation for calculating the CCE index may be performed based on $Y_{p,\lfloor n_{s,f}^{\mu}/4\rfloor}$ in units of four slots (i.e., uniformly for four consecutive slots). In the hashing operation, X represents the number of consecutive slots that form a slot group or the (minimum) distance/separation interval between spans where PDCCH MOs exist. The value of X may be predefined based on the SCS or configured through higher layer signaling such as RRC. Alternatively, the value of X may also be reported by the UE as the capability of the UE.

In the hashing operation, when multi-slot PDCCH monitoring is performed in a per slot-group basis or on a per Y-slot basis within the slot group, or when PDCCH MOs are present in only Y slots (where the slot group consists of X consecutive slots), CCE indices may be determined by matching the values of $Y_{p,n_{s,f}^{\mu}}$, $Y_{p,G_{s,f}^{\mu}}$, or $n_{s,f}^{\mu}$ to be the same in X or Y slots.

In the hashing operation, when multi-slot PDCCH monitoring is performed in units of a predefined span of (X, Y) and on a per Y-slot basis (or on a per Y-symbol basis), or when PDCCH MOs are present in only Y slots (or symbols) (where the span is obtained by changing X and/or Y on a per slot basis). CCE indices may be determined by matching the values of $Y_{p,n_{s,f}^{\mu}}$, $Y_{p,G_{s,f}^{\mu}}$, or $n_{s,f}^{\mu}$ to be the same in X or Y slots (or symbols).

## 1.5. Method of determining combination(s) of (X, Y) for multi-slot PDCCH monitoring

BD/CCE handling related to multi-slot PDCCH monitoring in high frequency bands (e.g., above 52.6 GHz) and/or high SCSs (e.g., 480 kHz, 960 kHz, etc.) may be done on a per slot-group basis. For example, for a serving cell and DL BWP, the maximum number of times that the UE is capable of performing BD for each SCS (or the maximum number of PDCCH candidates to be monitored or decoded by the UE) and the maximum number of non-overlapping CCEs may be defined on a per slot-group basis. Additionally, PDCCH-related procedures such as SS set configuration, SS allocation, PDCCH overbooking, and SS set dropping may be performed on a per slot-group basis as well.

The number of slots consisting of a slot group is defined as X. The number of consecutive slots within a slot group where the UE monitors PDCCH, an SS set is configured, or MOs corresponding to a specific SS set are located is defined as Y.

For example, for the 960 kHz SCS, X may be defined as 4, and the first two slots among X slots may be defined as Y slots as shown in FIG. 5. PDCCH monitoring may be performed only within Y slots for a specific SS set. Therefore, for the specific SS set, PDCCH MOs may only be configured (or located) in the Y slots. The specific SS set may refer to, for instance, a Type 1 CSS with dedicated RRC configuration, a Type 3 CSS, and/or a USS. However, the present disclosure is not limited thereto.

In this case, the combination of (X, Y) may vary depending on the SCS of a channel including a PDCCH. Table 11 shows (X, Y) combinations for different SCSs.

[Table 11]

| Supported combinations of (X,Y) |
| --- |
| A UE capable of multi-slot monitoring mandatorily supports |
| For SCS 480 kHz: (X,Y) = (4,1) |
| For SCS 960 kHz: (X,Y) = (8,1) |
| A UE capable of multi-slot monitoring optionally supports |
| For SCS 480 kHz: (X,Y) = (4,2), [(2,1)] |
| For SCS 960 kHz: (X,Y) = (8,4), (4,2), (4,1) |

A mandatory (X, Y) combination and/or an optional (X, Y) combination are indicated and/or configured by the BS (e.g., gNB) to the UE. The UE may perform multi-slot PDCCH monitoring based on the configured (X, Y) combinations.

The UE may report its preferred (or supported) combination(s) from among available (X, Y) combinations to the BS. The UE may determine the (X, Y) combination for multi-slot PDCCH monitoring based on one of Methods in 1.5-1-(1) or 1.5-1-(2) below.

1.5-1-(1) The UE may explicitly receive an indication or configuration for one of supportable (X, Y) combinations (or supported X values) from the BS through signaling such as RRC.

1.5-1-(2) Instead of receiving explicit signaling on the (X, Y) combination (or X value), the UE may receive an indication or configuration for MO locations through an SS set configuration. For example, the UE may assume or deduce the (X, Y) combination configured by the BS based on the SS set configuration and perform multi-slot PDCCH monitoring based on the assumption or deduction.

Even for the same SCS, the supportable (X, Y) combinations may vary depending on the UE capability. The UE reports to the BS that the UE is capable of supporting a specific (X, Y) combination through UE capability signaling. In this specification, the (X, Y) combination reported by the UE to the BS is denoted as (Xu, Yu). Furthermore, the (X, Y) combination configured by the BS to the UE based on the reported (Xu, Yu) combination is denoted as (Xg, Yg). Even if there is no explicit configurations from the BS, a reference combination of (X, Y) for the SS set configuration may be represented as (Xg, Yg). Alternatively, from the perspective of the BS, a combination of (X, Y) that is expected to be assumed by the UE based on the SS set configuration may be represented as (Xg, Yg).

The UE may expect the value of Xg to be equal to or greater than Xu and/or the value Yg to be equal to or less than Yu. Alternatively, the UE may expect that the minimum unit (e.g., periodicity, offset, and/or duration) of some or all of the parameters for an SS set is greater than Xu (or Xg) or that the periodicity and/or offset are set to multiples of Xu (or Xg). Regarding the (Xg, Yg) combination to be configured by the BS, Xg is not limited to only one among the values of Xu, and Yg is not limited to only one among the values of Yu.

For example, even if the UE reports (8, 4) and (4, 1) as the (Xu, Yu) combinations for 960 kHz, the BS may establish an SS set configuration such that the combination of (8, 1) is derived by the UE. The UE may operate by assuming that the SS set configuration corresponding to (8, 1) is established (that MOs are located according to the combination of (8, 1)).

The UE may report to the BS that multiple (X, Y) combinations are available for a specific serving cell (DL BWP or SCS). For example, the UE may report (Xu_1, Yu_1) and (Xu_2, Yu_2) to the BS. Based on the parameters in an SS set configuration configured for the corresponding serving cell (or DL BWP), the UE may estimate the (X, Y) combination configured by the BS (or to be applied by the UE for actual monitoring) among multiple (X, Y) combinations supported (or reported by the UE).

The UE may report the optional combination among the (X, Y) combinations in Table 11. If the SS set configuration received by the UE is not aligned with the reported (X, Y) combination, the UE may operate assuming that the BS configures the mandatory combination.

For example, it is assumed that for a specific cell (or DL BWP) with the 960 kHz SCS, the UE reports an optional combination of (4, 1). If the periodicity of the SS set configuration received by the UE is not aligned with (4, 1), the UE determines a mandatory combination of (8, 1) as the (X, Y) combination to be applied to the specific cell (or DL BWP) and performs PDCCH monitoring.

If a configured MO pattern is not aligned with the combination of (4, 1), the UE performs PDCCH monitoring based on the combination of (8, 1). Accordingly, the UE may perform PDCCH monitoring based on a slot group consisting of 8 slots.

Alternatively, the UE reports specific combination(s) (e.g., some of the combinations in Table 11) among the supportable (X, Y) combinations to the BS. If the SS set configuration is aligned with the corresponding (X, Y) combination, the UE may perform PDCCH monitoring by assuming that the (X, Y) combination is the combination configured by the BS.

Alternatively, the UE reports optional specific (X, Y) combination(s) among the supportable (X, Y) combinations to the BS. The reported combination may be some of the combinations in Table 11. Regardless of whether the UE reports the mandatory (X, Y) combination, if the SS set configuration is aligned with the specific (X, Y) combination, the UE may perform PDCCH monitoring by assuming that the specific (X, Y) combination is the (X, Y) combination configured by the BS. For example, the UE reports a mandatory combination of (X_1, Y_1) and an optional combination of (X_2, Y_2) among the combinations in Table 11 to the BS. The UE may perform PDCCH monitoring by assuming that among the two combinations, a combination aligned with the SS set configuration (or MO pattern) is the combination configured by the BS. Alternatively, the UE reports only the optional combination of (X_2, Y_2) among the combinations in Table 11 to the BS. The UE may perform PDCCH monitoring by assuming that a combination aligned with the SS set configuration (or MO pattern) among the reported combinations and the mandatory combination for the corresponding SCS is the combination configured by the BS.

As another example, among the (X, Y) combinations that the UE is capable of supporting, the UE may report a plurality of specific combinations (C combinations) to the BS. For example, if C = 2, (Xu_1, Yu_1) and (Xu_2, Yu_2) are reported. If the parameters of the SS set configuration confirmed by the UE or the MO pattern configured by the BS are aligned with all of the reported C combinations, the UE may operate by assuming that one (specific) combination among the C combinations is configured by the BS. Alternatively, if only D combinations among the C combinations are aligned with the parameters of the SS set configuration parameters or the MO pattern configured by BS (where D is smaller than C), the UE may operate by assuming one of the D combinations. The UE may select one combination according to the following three methods in 1.5-2.

1.5-2-(1) The UE may operate by assuming that a combination of (max (Xu_1, Xu_2, ..., Xu_C), min (Yu_1, Yu_2, ..., Yu_C)) is the (X, Y) combination configured by the BS.

For example, when the UE determines an appropriate (X, Y) combination based on the MO pattern and/or SS set configuration after reporting two combinations of (8, 1) and (4, 1) for 960 kHz, if both (8, 1) and (4, 1) do not violate the parameters of the SS set configuration and/or the MO pattern, the UE may operate by assuming (8, 1) among the two reported combinations as the (X, Y) combination configured by the BS.

As another example, Xg may be determined as the maximum value among reported value of Xu (i.e., max (Xu_1, Xu_2, ..., Xu_C)), and Y may be determined as the minimum value of Y paired with Xg.

As another example, when the UE checks the MO pattern (in the time domain) according to the SS set configured by the BS (where it is assumed that C = 2), if the MO pattern is aligned with all of the multiple combinations that the UE is capable of supporting (in this example, two combinations). The UE may assume that (Xu, Yu) is configured, where (Xu, Yu) corresponds to the value of Xu where the largest number of BDs/CCEs is defined among Xu_1 and Xu_2 (or corresponding to the value of Yu where the largest number of BDs/CCEs is defined among Yu_1 and Yu_2). Then, the UE may perform a series of operations (e.g. PDCCH-related procedures such as SS allocation, PDCCH overbooking, and SS (set) dropping) based on the corresponding combination.

1.5-2-(2) The UE may operate by assuming that X configured by the BS is max (Xu_1, Xu_2, ..., Xu_C) and Y configured by the BS is Y capable of being paired with X.

For example, if a k-th combination among the combinations reported by the UE is the maximum value of Xu (that is, Xu_k = max (Xu_1, Xu_2, ..., Xu_C)), the UE may operate by assuming that (Xu_k, Yu_k) is a combination of (X, Y) configured by the BS. If only one combination includes Xu_k among C combinations, the UE determines a combination to be used as (Xu_k, Yu_k). If Y has two or more values corresponding to Xu_k, the UE may estimate and/or determine the (X, Y) combination configured by the BS based on the smallest value of Y among the values of Y. For example, when the UE reports two combinations of (8, 1) and (4, 1), if (8, 1) and (4, 1) are all aligned with the MO pattern, (8, 1) corresponding to 8, which is the result of max (8, 4), may be the (X, Y) combination assumed by the UE. As another example, if the UE reports three combinations of (8, 1), (8, 4), and (4, 2), and all three combinations are aligned with the MO pattern, X assumed by the UE is set to 8 and among the Y values of (8, 1) and (8, 4), Y = 1, which is the minimum value, is selected. Finally, the UE assumes (8, 1) as (X, Y) configured by the BS and performs PDCCH monitoring.

As another example, when the UE checks the MO pattern (in the time domain) according to the SS set configured by the BS (where it is assumed that C = 3), if the corresponding MO pattern satisfies all three combinations of (Xu_1, Yu_1), (Xu_2, Yu_2), and (Xu_3, Yu_3) that the UE is capable of supporting, the UE assumes that the value of X where the largest number of BDs/CCEs is defined among Xu_1, Xu_2, and Xu_3 is the value of X configured by the BS. If there is only one value of Y paired with the assumed value of X, the UE may assume that the value of Y is the value of Y configured by the BS. If there are multiple values of Y capable of being paired with the assumed value of X, the UE may assume the (X, Y) combination configured by the BS using the minimum value of Y among the multiple values of Y and the assumed value of X. Then, the UE may perform a series of operations (e.g., PDCCH-related procedures such as SS allocation, PDCCH overbooking, and SS (set) dropping) based on the corresponding combination. Although three combinations are used as an example, the example may be equally applied to multiple other combinations.

1.5-2-(3) The UE may perform monitoring by assuming that X configured by the BS is max (Xu_1, Xu_2, ..., Xu_C). That is, the UE may perform monitoring by estimating only the value of X configured by the BS. In this case, Y may be Y paired with X in (X, Y) reported by the UE, Y paired with X in (X, Y) supported for a related SCS, or Y paired with X in mandatory (X, Y) for a related SCS. For example, if only the combinations in Table 11 are defined, Y may always be assumed to be 1, regardless of SCSs and X.

As another example, when the UE checks the MO pattern (in the time domain) according to the SS set configured by the BS (where it is assumed that C = 3), if the corresponding MO pattern satisfies all three combinations of (Xu_1, Yu_1), (Xu_2, Yu_2), and (Xu_3, Yu_3) that the UE is capable of supporting, the UE assumes that the value of X where the largest number of BDs/CCEs is defined among Xu_1, Xu_2, and Xu_3 is the value of X configured by the BS. If there is only one value of Y paired with the assumed value of X, the UE may assume that the value of Y is the value of Y configured by the BS. The value of Y may be determined as one of the values paired with X as described above. Then, the UE may perform a series of operations (e.g., PDCCH-related procedures such as SS allocation, PDCCH overbooking, and SS (set) dropping) based on the determined and/or estimated combination. Although three combinations are used as an example, the example may be equally applied to multiple other combinations.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by a base station, but the operations may also be performed by the relay node.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Examples

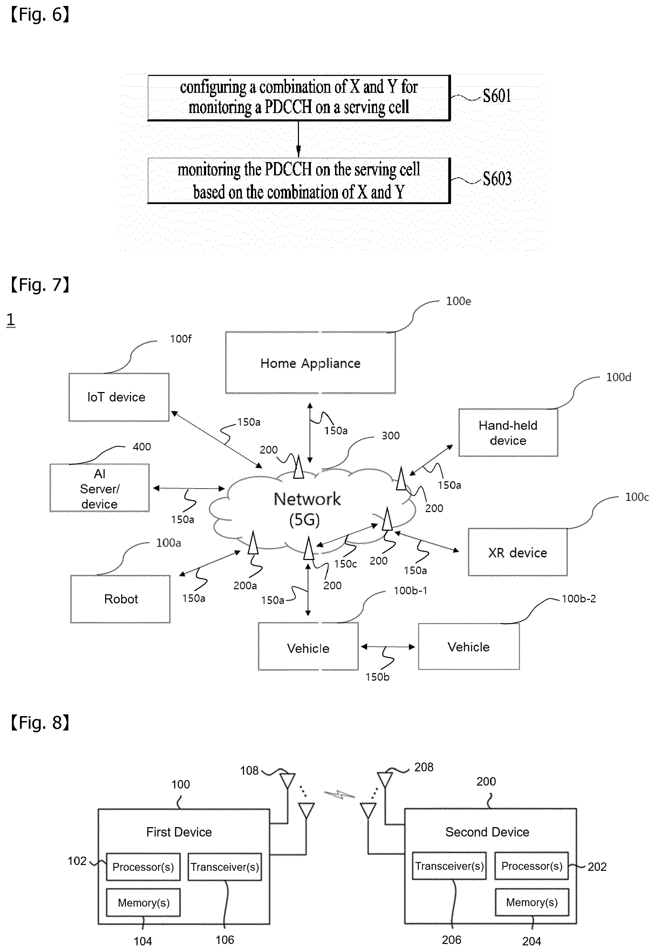

FIG. 6 is a flowchart illustrating a signal transmission and reception method according to an embodiment of the present disclosure.

Referring to FIG. 6, an embodiment of the present disclosure may be performed by a UE. The embodiment of the present disclosure may include: configuring a combination of X and Y for monitoring a PDCCH on a serving cell (S601); and monitoring the PDCCH on the serving cell based on the combination of X and Y (S603).

In addition to the operations of FIG. 6, one or more of the operations described above in Section 1 may be additionally performed.

As described above, X represents the number of consecutive slots included in a slot group. Referring to FIG. 5, slot groups are repeated continuously without overlapping. Y represents the number of consecutive slots within one slot group. Since slot groups are repeated continuously without overlapping, Y slots are also repeated at the same positions within X slots.

Referring to Section 1.3, before reporting the capability of the UE, the UE may monitor the PDCCH by configuring a default value of X and a default value of Y. In other words, if information related to the PDCCH monitoring capability for the serving cell is not provided, the UE may monitor the PDCCH by configuring the default value of X and the default value of Y.

Referring to (2) of Section 1.3, for an SCS of 480 kHz, the default value of X may be set to X = 4, and the default value of Y may be set to Y = 1. Referring to (3) of Section 1.3, for an SCS of 960 kHz, the default value of X may be set to X = 8, and the default value of Y may be set to Y = 1.

An SCS is configured on a per serving-cell basis. Thus, referring to the content in Section 1.3, if the information related to the PDCCH monitoring capability for the serving cell is not provided and the serving cell is configured with the 480 kHz SCS, the combination of X = 4 and Y = 1 is used for PDCCH monitoring. In addition, if the information related to the PDCCH monitoring capability for the serving cell is not provided and the serving cell is configured with the 960 kHz SCS, the combination of X = 8 and Y = 1 is used for PDCCH monitoring.

Referring to (1) of Section 1.3, the default value of X and the default value of Y are set to X = 4 and Y = 1 for the 480 kHz SCS in (2) of Section 1.3. This may be because 4 is the maximum value among the values of X available for the 480 kHz SCS and 1 is the minimum value among the values of Y available for the 480 kHz SCS. In addition, in (3) of Section 1.3, the default value of X and the default value of Y are set to X = 8 and Y = 1 for the 960 kHz SCS. This may be because 8 is the maximum value among the values of X available for the 960 kHz SCS and 1 is the minimum value among the values of Y available for the 960 kHz SCS.

Therefore, if a specific SCS above a threshold is configured for the serving cell without the information related to the PDCCH monitoring capability for the serving cell, the combination of X and Y may be used, where X is the maximum value available for the specific SCS and Y is the minimum value available for the specific SCS. Since the methods of the present disclosure relate to high frequency bands where a high SCS above 480 kHz is capable of being used, the threshold may be 480 kHz.

Additionally, referring to Section 1.5, the UE may report a plurality of combinations of X and Y as the UE capability and use one of the plurality of combinations according to the configuration of a search space set. If the configuration of the search space set is aligned with D combinations among C combinations, where D is smaller than or equal to C, the UE may select one of the D combinations and monitor the PDCCH according to one of the three methods in 1.5-2.

The operations in Section 1.3 may be performed when the information related to the PDCCH monitoring capability for the serving cell is not provided, and the operations in Section 1.5 may be performed when the information related to the PDCCH monitoring capability for the serving cell is provided. Thus, those skilled in the art may easily understand that the above operations are compatible and combinable with other embodiments.

For example, if the UE uses the method in 1.5-2-(3), the UE may monitor the PDCCH by selecting the value of X where the largest number of BDs/CCEs is defined among the D combinations. Y is set to a specific value paired with the selected value of X.

As defined above, the number of BDs is the maximum number of PDCCH candidates monitored in the serving cell, and the number of CCEs is the maximum number of non-overlapping CCEs in the serving cell. When a slot group is configured, BD/CCE limits may be defined in units of multiple slots. The number of BDs/CCEs may defined per combination of X and Y. Additionally, since the number of BDs/CCEs is defined for the value of X (in a group of X slots) in 1.5-2-(3), the number of BDs is the maximum number of PDCCH candidates monitored in a group of X slots per combination of X and Y per serving cell, and the number of CCEs is the maximum number of non-overlapping CCEs in a group of X slots per combination of X and Y per serving cell. Therefore, the number of BDs/CCEs may vary depending on the value of X. The UE selects the value of X related to the largest number of BDs/CCEs among the D combinations suitable for the search space set configuration. In addition, the UE selects Y belonging to the same combination as the selected value of X.

In summary, information related to the PDCCH monitoring capability is provided in relation to a plurality of combinations of X and Y. Based on that the configuration of a search space set is related to at least two combinations among the plurality of combinations of X and Y, the UE may monitor a PDCCH based on a specific combination of X and Y related to M and C, where M and C are related to the largest one among the at least two combinations. M refers to the number of BDs and C refers to the number of CCEs.

Additionally, referring to Section 1.2, if $N\_cap < N\_dl$, that is, if the number of serving cells configured to the UE exceeds the number of cells where the UE is capable of performing PDCCH monitoring, the number of BDs/CCEs may be reconfigured. For example, referring to Method 1.2-1, when the locations and sizes of X of multiple serving cells configured to the UE are the same, BD/CCE reconfiguration is performed on a per X-slot basis.

After the UE determines the combination of X and Y, the number of times that the UE performs BD and the number of CCEs to be searched are determined according to the determined values of X and Y. Sections 1.1 and 1.2 are intended to determine the number of BD attempts and the number of CCEs, and thus, those skilled in the art may easily understand that the content in Sections 1.1 and 1.2 are compatible and combinable with other embodiments.

When the BD is reconfigured, the number of PDCCH candidates to be monitored is reconfigured. Thus, based on that the number of serving cells exceeds the number of cells where the UE is capable of performing PDCCH monitoring, the number of PDCCH candidates is reconfigured for multiple serving cells on a per X-slot basis.

Additionally, when the CCE is reconfigured, the number of non-overlapping CCEs is also reconfigured. Thus, based on the number of serving cells exceeds the number of cells where the UE is capable of performing PDCCH monitoring, the number of non-overlapping CCEs is reconfigured for multiple serving cells on a per X-slot basis.

When the UE is configured with the default value of X based on the operations described in Section 1.3, or when the UE is configured with a specific value of X related to the largest values of M and C as described in Section 1.5, both the default value of X and/or the specific value of X are for one serving cell. In addition, a plurality of serving cells carrier-aggregated with the serving cell having the default value of X and/or the specific value of X configured therefor may also be configured. If the default value of X and/or the specific value of X are equally configured for the plurality of serving cells, the operations described in 1.2-1 may be performed.

In summary, when a plurality of serving cells including a serving cell with a default value of X and/or a specific value of X are configured for PDCCH monitoring, if the plurality of serving cells includes the same X slots as the serving cell having the default value of X and/or the specific value of X configured therefor, based on that the number of serving cells exceeds the maximum number of cells where the UE is capable of performing PDCCH monitoring, the number of PDCCH candidates to be monitored within the X slots of the plurality of serving cells may be reconfigured.

Additionally, when a plurality of serving cells including a serving cell with a default value of X and/or a specific value of X are configured for PDCCH monitoring, if the plurality of serving cells includes the same X slots as the serving cell having the default value of X and/or the specific value of X configured therefor, based on that the number of serving cells exceeds the maximum number of cells where the UE is capable of performing PDCCH monitoring, the number of non-overlapping CCEs within the X slots of the plurality of serving cells may be reconfigured.

The operations in Section 1.4 is to determine the hashing function for PDCCH monitoring after determining a combination of X and Y, and thus, those skilled in the art may easily understand that the above operations are compatible and combinable with other embodiments.

In addition to the operations described with reference to FIG. 6, one or more of the operations described above in FIGS. 1 to 5 and/or the operations described above in Section 1 may be combined and further performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g.,

5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 1 00b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

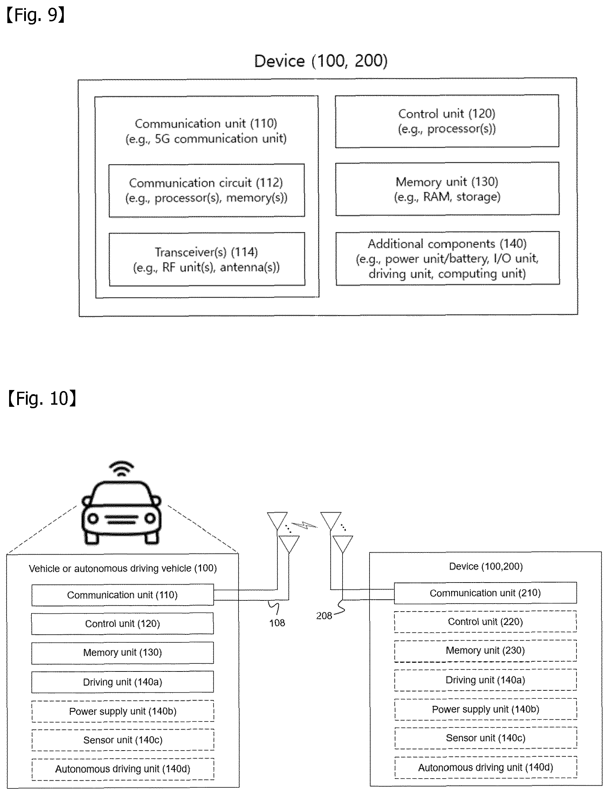

FIG. 9 illustrates another example of a wireless device applied to the present disclosure. The wireless device may be implemented in various forms according to a use case/service (refer to FIG. 7).
Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.
The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.
In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.
Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively,
[0150]     The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The present invention is defined by the appended independent claims.

**INDUSTRIAL APPLICABILITY**

As described above, the present disclosure is applicable to various wireless communication systems.

**Claims**

1.  A method of monitoring a control signal by a user equipment, UE, in a wireless communication system, the method comprising:

    indicating a capability to monitor a physical downlink control channel, PDCCH, according to multiple combinations of X and Y, wherein X is a number of consecutive slots included in a slot-group, and slot-groups are consecutive and non-overlapping, and Y is a number of consecutive slots within X slots; and
    receiving a configuration of search space sets for PDCCH monitoring on a serving cell, wherein the configuration is related to at least two combinations of X and Y of the multiple combinations of X and Y; and
    monitoring the PDCCH on the serving cell in Y slots according to a combination of X and Y, from the at least two combinations of X and Y, that is associated with the largest values of M and C,
    wherein M denotes maximum number of monitored PDCCH candidates in a group of X slots i) per combination of X and Y and ii) per serving cell, and
    wherein C denotes maximum number of non-overlapped control channel elements, CCEs, in the group of X slots i) per combination of X and Y and ii) per serving cell.

2.  The method of claim 1, wherein serving cells including the serving cell are configured for monitoring the PDCCH, the serving cells include same X slots as the serving cell, and
    wherein, based on a number of the serving cells larger than a maximum number of cells on which the UE is capable of monitoring the PDCCH, a number of PDCCH candidates to be monitored within the X slots in the serving cells is reconfigured.

3.  The method of claim 1, wherein serving cells including the serving cell are configured for monitoring the PDCCH, the serving cells include same X slots as the serving cell, and
    wherein, based on a number of the serving cells larger than a maximum number of cells on which the UE is capable of monitoring the PDCCH, a number of non-overlapped control channel elements, CCEs, to be monitored within the X slots in the serving cells is reconfigured.

4. A user equipment, UE, configured to monitoring a control signal in a wireless communication system, the UE comprising:

at least one transceiver;
at least one processor; and
at least one memory operably connected to the at least one processor and configured to store instructions that, when executed, cause the at least one processor to perform specific operations comprising:

indicating a capability to monitor a physical downlink control channel, PDCCH, according to multiple combinations of X and Y, wherein X is a number of consecutive slots included in a slot-group, and slot-groups are consecutive and non-overlapping, and Y is a number of consecutive slots within X slots; and
receiving a configuration of search space sets for PDCCH monitoring on a serving cell, wherein the configuration is related to at least two combinations of X and Y of the multiple combinations of X and Y; and
monitoring the PDCCH on the serving cell in Y slots according to a combination of X and Y, from the at least two combinations of X and Y, that is associated with the largest values of M and C,
wherein M denotes maximum number of monitored PDCCH candidates in a group of X slots i) per combination of X and Y and ii) per serving cell, and
wherein C denotes maximum number of non-overlapped control channel elements, CCEs, in the group of X slots i) per combination of X and Y and ii) per serving cell.

5. The UE of claim 4, further configured to perform any one of the methods of claims 2 to 3.

6. A computer-readable non-volatile storage medium having at least one computer program configured to cause at least one processor to perform any one of the methods of claims 1 to 3.

**Patentansprüche**

1. Verfahren zum Überwachen eines Steuersignals durch ein Benutzergerät, UE, in einem drahtlosen Kommunikationssystem, wobei das Verfahren umfasst:

Anzeigen einer Fähigkeit zum Überwachen eines physikalischen Downlink-Steuerkanals, PDCCH, gemäß mehreren Kombinationen von X und Y, wobei X eine Anzahl aufeinanderfolgender Slots ist, die in einer Slot-Gruppe enthalten sind, und Slot-Gruppen aufeinanderfolgend und nicht überlappend sind, und Y eine Anzahl aufeinanderfolgender Slots innerhalb von X slots ist; und
Empfangen einer Konfiguration von Suchraum-Sätzen zur PDCCH-Überwachung auf einer bedienenden Zelle, wobei die Konfiguration mit mindestens zwei Kombinationen von X und Y der mehreren Kombinationen von X und Y in Beziehung steht; und
Überwachen des PDCCH auf der bedienenden Zelle in Y Slots gemäß einer Kombination von X und Y aus den mindestens zwei Kombinationen von X und Y, die mit den größten Werten von M und C verbunden ist,
wobei M eine maximale Anzahl überwachter PDCCH-Kandidaten in einer Gruppe von X Slots i) pro Kombination von X und Y und ii) pro bedienender Zelle bezeichnet, und
wobei C eine maximale Anzahl nicht überlappender Steuerkanalelemente, CCEs, in der Gruppe von X Slots i) pro Kombination von X und Y und ii) pro bedienender Zelle bezeichnet.

2. Verfahren nach Anspruch 1, wobei die bedienenden Zellen einschließlich der bedienenden Zelle zur Überwachung des PDCCH konfiguriert sind, die bedienenden Zellen dieselben X Slots wie die bedienende Zelle umfassen, und wobei auf der Grundlage, dass eine Anzahl von bedienenden Zellen größer ist als eine maximale Anzahl von Zellen, auf denen das UE den PDCCH überwachen kann, eine Anzahl von PDCCH-Kandidaten, die innerhalb der X Slots in den bedienenden Zellen überwacht werden sollen, neu konfiguriert wird.

3. Verfahren nach Anspruch 1, wobei bedienende Zellen einschließlich der bedienenden Zelle zum Überwachen des PDCCH konfiguriert sind, die bedienenden Zellen dieselben X Slots wie die bedienende Zelle enthalten, und wobei auf der Grundlage, dass eine Anzahl von bedienenden Zellen größer ist als eine maximale Anzahl von Zellen, auf denen das UE den PDCCH überwachen kann, eine Anzahl von nicht überlappenden Steuerkanalelementen, CCEs, die innerhalb der X Slots in den bedienenden Zellen überwacht werden sollen, neu konfiguriert wird.

4.  Benutzergerät, UE, das zum Überwachen eines Steuersignals in einem drahtlosen Kommunikationssystem konfiguriert ist, wobei das UE umfasst:

    mindestens einen Transceiver;
    mindestens einen Prozessor; und
    mindestens einen Speicher, der funktionsfähig mit dem mindestens einen Prozessor verbunden und so konfiguriert ist, dass er Befehle speichert, die, wenn sie ausgeführt werden, den mindestens einen Prozessor dazu veranlassen, bestimmte Operationen durchzuführen, die Folgendes umfassen:

    Anzeigen einer Fähigkeit zum Überwachen eines physikalischen Downlink-Steuerkanals, PDCCH, gemäß mehreren Kombinationen von X und Y, wobei X eine Anzahl aufeinanderfolgender Slots ist, die in einer Slot-Gruppe enthalten sind, und Slot-Gruppen aufeinanderfolgend und nicht überlappend sind, und Y eine Anzahl aufeinanderfolgender Slots innerhalb von X Slots ist; und
    Empfangen einer Konfiguration von Suchraum-Sätzen zur PDCCH-Überwachung auf einer bedienenden Zelle, wobei die Konfiguration mit mindestens zwei Kombinationen von X und Y der mehreren Kombinationen von X und Y in Beziehung steht; und
    Überwachen des PDCCH auf der bedienenden Zelle in Y Slots gemäß einer Kombination von X und Y aus den mindestens zwei Kombinationen von X und Y, die mit den größten Werten von M und C verbunden ist, wobei M eine maximale Anzahl überwachter PDCCH-Kandidaten in einer Gruppe von X Slots i) pro Kombination von X und Y und ii) pro bedienender Zelle bezeichnet, und
    wobei C eine maximale Anzahl nicht überlappender Steuerkanalelemente, CCEs, in der Gruppe von X Slots i) pro Kombination von X und Y und ii) pro bedienender Zelle bezeichnet.

5.  UE nach Anspruch 4, das ferner so konfiguriert ist, dass es eines der Verfahren nach den Ansprüchen 2 bis 3 durchführt.

6.  Computerlesbares nichtflüchtiges Speichermedium mit mindestens einem Computerprogramm, das so konfiguriert ist, dass es mindestens einen Prozessor dazu veranlasst, eines der Verfahren nach den Ansprüchen 1 bis 3 durchzuführen.

**Revendications**

1.  Procédé de surveillance d'un signal de commande par un équipement utilisateur, UE, dans un système de communication sans fil, le procédé comprenant:

    l'indication d'une capacité à surveiller un canal physique de commande de liaison descendante, PDCCH, selon plusieurs combinaisons de X et Y, dans lequel X est un nombre de créneaux consécutifs inclus dans un groupe de créneaux, et les groupes de créneaux sont consécutifs et ne se chevauchent pas, et Y est un nombre de créneaux consécutifs dans les X créneaux; et
    la réception d'une configuration d'ensembles d'espaces de recherche pour la surveillance de PDCCH sur une cellule de desserte, dans lequel la configuration est liée à au moins deux combinaisons de X et Y parmi les multiples combinaisons de X et Y; et
    la surveillance du PDCCH sur la cellule de desserte dans les créneaux Y selon une combinaison de X et Y, parmi l'au moins deux combinaisons de X et Y, qui est associée aux valeurs les plus élevées de M et C,
    dans lequel M désigne le nombre maximal de candidats PDCCH surveillés dans un groupe de X intervalles i) par combinaison de X et Y et ii) par cellule de desserte, et
    dans lequel C désigne le nombre maximal d'éléments de canal de commande non superposés, CCE, dans le groupe de X intervalles i) par combinaison de X et Y et ii) par cellule de desserte.

2.  Procédé selon la revendication 1, dans lequel les cellules de desserte y compris la cellule de desserte, sont configurées pour surveiller le PDCCH, les cellules de desserte comprennent les mêmes X créneaux que la cellule de desserte, et
    dans lequel, sur la base d'un nombre de cellules de desserte supérieur à un nombre maximum de cellules sur lesquelles l'UE est capable de surveiller le PDCCH, un nombre de candidats PDCCH à surveiller dans les créneaux X dans les cellules de desserte est reconfiguré.

**3.** Procédé selon la revendication 1, dans lequel les cellules de desserte y compris la cellule de desserte, sont configurées pour surveiller le PDCCH, les cellules de desserte comprennent les mêmes X créneaux que la cellule de desserte, et

dans lequel, sur la base d'un nombre de cellules de desserte supérieur à un nombre maximum de cellules sur lesquelles l'UE est capable de surveiller le PDCCH, un nombre d'éléments de canal de commande non superposés, CCE, à surveiller dans les créneaux X dans les cellules de desserte est reconfiguré.

**4.** Équipement utilisateur, UE, configuré pour transmettre un signal montant dans un système de communication sans fil, l'UE comprenant:

au moins un émetteur récepteur; et
au moins un processeur; et
au moins une mémoire connectée fonctionnellement à l'au moins un processeur et configurée pour stocker des instructions qui, lorsqu'elles sont exécutées, amènent l'au moins un processeur à effectuer les opérations comprenant:

l'indication d'une capacité à surveiller un canal physique de commande de liaison descendante, PDCCH, selon plusieurs combinaisons de X et Y, dans lequel X est un nombre de créneaux consécutifs inclus dans un groupe de créneaux, et les groupes de créneaux sont consécutifs et ne se chevauchent pas, et Y est un nombre de créneaux consécutifs dans les X créneaux; et
la réception d'une configuration d'ensembles d'espaces de recherche pour la surveillance de PDCCH sur une cellule de desserte, dans lequel la configuration est liée à au moins deux combinaisons de X et Y parmi les multiples combinaisons de X et Y; et
la surveillance du PDCCH sur la cellule de desserte dans les créneaux Y selon une combinaison de X et Y, parmi l'au moins deux combinaisons de X et Y, qui est associée aux valeurs les plus élevées de M et C, dans lequel M désigne le nombre maximal de candidats PDCCH surveillés dans un groupe de X intervalles i) par combinaison de X et Y et ii) par cellule de desserte, et
dans lequel C désigne le nombre maximal d'éléments de canal de commande non superposés, CCE, dans le groupe de X intervalles i) par combinaison de X et Y et ii) par cellule de desserte.

**5.** UE selon la revendication 4, configuré en outre pour exécuter l'un parmi les procédés des revendications 2 à 3.

**6.** Support d'enregistrement non volatile lisible par ordinateur comportant un programme informatique configuré pour amener au moins un processeur à exécuter l'un quelconque des procédés des revendications 1 à 3.

【Fig. 1】

【Fig. 2】

【Fig. 3】

【Fig. 4】

| slot index | 0 | 1 | 2 | 3 | 4 | 5 | 6 | 7 |
|---|---|---|---|---|---|---|---|---|
| 480kHz | X(n) | | | | | | | |
| | Y(n) | | | | | | | |
| 960kHz | X(m) | | | | | | | |
| | | | Y(m) | | | | | |

【Fig. 5】

【Fig. 6】

configuring a combination of X and Y for monitoring a PDCCH on a serving cell — S601

monitoring the PDCCH on the serving cell based on the combination of X and Y — S603

【Fig. 7】

1

【Fig. 8】

【Fig. 9】

Device (100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

【Fig. 10】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

**EP 4 380 093 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM INCORPORATED**. PDCCH monitoring enhancements. *3GPP DRAFT; R1-2110173*